# EUROPEAN PATENT APPLICATION

(11) **EP 4 755 678 A1**
(43) Date of publication of application: **10.06.2026**
(21) Application number: 24864685.3
(22) Date of filing: 12.09.2024
(51) Int. Cl.: B60J 7/00

(54) **VEHICLE PANORAMIC SKYROOF STRUCTURE AND VEHICLE**

(30) Priority: 13.09.2023 CN 202311177516
(71) Applicant: Fuyao Glass Industry Group Co., Ltd., Fuqing, Fujian 350300 (CN)
(72) Inventor: LIN, Zhirong, Fujian 350300 (CN); WANG, Zhixin, Fujian 350300 (CN); JI, Yuehua, Fujian 350300 (CN); YE, Yunxiang, Fujian 350300 (CN); XUE, Xianqi, Fujian 350300 (CN)
(74) Representative: Hoffmann Eitle
(86) International application number: PCT/CN2024/118432
(87) International publication number: WO 2025/055971

(57) **Abstract**

A vehicle panoramic skyroof structure (10) and a vehicle, the vehicle panoramic skyroof structure (10) comprising a skyroof glass (200), a connecting component (300) and elastic snap-fit members (400); a plurality of protrusions (301) arranged at intervals in the length direction of the connecting component (300) are formed on the surface of the connecting component (300), or continuous protrusions (302) extending along a spiral line are formed on the surface of the connecting component (300); the elastic snap-fit members (400) can be snap-fit with the protrusions (301) or the continuous protrusions (302); one of the connecting component (300) and the elastic snap-fit members (400) is fixed to the skyroof glass (200), the connecting component (300) is used for passing through a mounting hole (110) on a vehicle roof frame (100), and the other one of the connecting component (300) and the elastic snap-fit members (400) is used for abutting against the side of the vehicle roof frame (100) facing away from the skyroof glass (200).

## Description

This application claims priority to Chinese patent application No. 202311177516.9, entitled "PANORAMIC SUNROOF STRUCTURE AND VEHICLE", filed on September 13, 2023, which is incorporated herein by reference in its entirety.

### TECHNICAL FIELD

The present application relates to the field of vehicle technology, and in particular, to a panoramic sunroof structure and vehicle.

### BACKGROUND

With the development of society, people not only consider safety and power when purchasing vehicles, but also pay attention to the appearance and shape of the vehicle, which has led to increasing interest in vehicles having panoramic sunroofs. Compared to the conventional vehicles with sunroofs, the vehicle having the panoramic sunroof can increase a light-receiving area and enhance the appearance.

In the related art, a sunroof glass is generally connected to a roof frame through glass adhesive. After the sunroof glass is mounted, the roof is usually mounted. The roof is generally connected to the sunroof glass through snap fasteners. During mounting, the operator needs to apply an upward force to the roof to engage the snap fastener on the roof with the snap fastener on the sunroof. However, due to a long curing time required for the glass adhesive, the glass adhesive is usually not fully cured when the roof is mounted. Therefore, the force applied by the operator during the mounting of the roof may cause the sunroof glass to be displaced, resulting in poor assembly.

### SUMMARY

According to various embodiments of the present application, a panoramic sunroof structure and a vehicle are provided.

In a first aspect, embodiments of the present application provide a panoramic sunroof structure including a sunroof glass, a connecting member, and an elastic engaging member. A surface of the connecting member is provided with a plurality of protrusions spaced apart along a length direction of the connecting member, or a surface of the connecting member is formed with a continuous protrusion extending along a spiral line. The elastic engaging member is capable of being engaged with the plurality of protrusions or the continuous protrusion. One of the connecting member and the elastic engaging member is fixed to the sunroof glass, the connecting member is configured to extend through a mounting hole provided on a roof frame, and another of the connecting member and the elastic engaging member is configured to abut against a side of the roof frame away from the sunroof glass.

In a second aspect, embodiments of the present application provide a vehicle including the aforementioned panoramic sunroof structure.

### BRIEF DESCRIPTION OF THE DRAWINGS

FIG. 1 is a schematic diagram of a panoramic sunroof structure according to an embodiment of the present application.
FIG. 2 is a schematic diagram of a panoramic sunroof structure according to another embodiment of the present application.
FIG. 3 is a partial enlarged view of FIG. 2.
FIG. 4 is a schematic diagram of a panoramic sunroof structure according to another embodiment of the present application.
FIG. 5 is a schematic diagram of a panoramic sunroof structure according to another embodiment of the present application.
FIG. 6 is a schematic diagram of a panoramic sunroof structure according to another embodiment of the present application.
FIG. 7 is a schematic diagram of a panoramic sunroof structure according to another embodiment of the present application.
FIG. 8 is a schematic diagram of an elastic engaging member according to another embodiment of the present application.
FIG. 9 is a cross-sectional view of an elastic engaging member according to another embodiment of the present application.
FIG. 10 is a schematic diagram of an elastic engaging member according to another embodiment of the present application.
FIG. 11 is a schematic diagram of a claw according to another embodiment of the present application.
FIG. 12 is a schematic diagram of a tooth structure and a protrusion or a continuous protrusion according to an embodiment of the present application.
FIG. 13 is a schematic diagram of a panoramic sunroof structure according to another embodiment of the present application.
FIG. 14 is a partial enlarged view of FIG. 13.

### Reference signs:

10, panoramic sunroof structure;
100, roof frame; 110, mounting hole;
200, sunroof glass;
300, connecting member; 301, protrusion; 302, continuous protrusion; 3011, first side surface; 310, expanding portion; 320, connecting column;
400, elastic engaging member; 410, engaging disc; 420, claw; 421, connecting arm; 422, tooth structure; 4221, first tooth surface; 4222, second tooth surface; 430, tongue; 440, extending portion; 450, main body portion; 460, injection molding structure; 470, fixing cylinder; 480, positioning strip; 490, handle;
500, first encapsulation structure;
600, adhesive;
700, second encapsulation structure.

### DETAILED DESCRIPTION OF THE EMBODIMENTS

In order to make the aforementioned objects, features and advantages of the present application more apparent, the embodiments of the present application are described below in detail with reference to the accompanying drawings. In the following description, numerous specific details are set forth, so as to provide a thorough understanding of the present application. However, the present application may be implemented in many ways different from those described herein, those skilled in the art may make similar improvements without departing from the essence of the present application, and therefore, the present application is not limited to the examples disclosed below.

In the description of the present application, it should be understood that the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential direction" are based on the azimuths or position relationships shown in the attached drawings. These terms are only for the convenience of describing the present application and simplifying the description, rather than indicating or implying that the indicated devices or elements must have the specific azimuths, or be constructed or operated in the specific azimuths, and therefore such terms cannot be understood as limitations of the present application.

In addition, the terms "first" and "second" are only used for descriptive purposes and cannot be understood as indicating or implying relative importance or implicitly indicating the number of indicated technical features. Thus, the features defined with "first" and "second" may explicitly or implicitly include at least one of the features. In the description of the present application, "a plurality of' means at least two, such as two, three, etc., unless otherwise expressly and specifically defined.

In the present application, unless otherwise expressly specified and limited, the terms "mount", "connect", "couple", "fix" and the like should be interpreted broadly. For example, the terms can mean fixed connection, detachable connection, or being integrated. The terms can mean mechanical connection or electrical connection. The terms can mean directly connection or indirectly connection through an intermediate medium. The terms can mean connection within two elements or interaction relationship between two elements, unless otherwise expressly limited. For those skilled in the art, the specific meaning of the above terms in the present application should be understood according to the specific situation.

In the present application, unless otherwise expressly specified and limited, a first feature "above" or "below" a second feature may be in direct contact with the second feature, or the first and second features may be in indirect contact through an intermediate medium. Moreover, the first feature "above" the second feature may be right above or obliquely above the second feature, or the first feature may be merely located at a height higher than the second feature. The first feature "below" the second feature may be right below or obliquely below the second feature, or the first feature may be merely located at a height lower than that of the second feature.

It should be noted that when an element is called "fixed to" or "provided on" another element, it can be directly on another element or there can be an intermediate element. When an element is considered to be "connected" to another element, it can be directly connected to another element or there can be an intermediate element. The terms "vertical", "horizontal", "up", "down", "left", "right" and similar expressions used herein are for the purpose of illustration only and do not represent the only ways for implementation.

An embodiment of the first aspect of the present application provides a panoramic sunroof structure, which includes a sunroof glass, a connecting member, and an elastic engaging member. A surface of the connecting member is provided with a plurality of protrusions spaced apart along a length direction of the connecting member, or a surface of the connecting member is formed with a continuous protrusion extending along a spiral line. The elastic engaging member is capable of being engaged with the plurality of protrusions or the continuous protrusion. One of the connecting member and the elastic engaging member is fixed to the sunroof glass, the connecting member is configured to extend through a mounting hole provided on a roof frame, and another of the connecting member and the elastic engaging member is configured to abut against a side of the roof frame away from the sunroof glass.

In some embodiments, the connecting member is fixed to the sunroof glass through a first connecting layer. The elastic engaging member includes an engaging disc and a plurality of claws connected to the engaging disc. The engaging disc has an annular structure. Each claw includes a connecting arm and a tooth structure. One end of the connecting arm is connected to an inner ring of the engaging disc, the tooth structure is provided at the other end of the connecting arm, and the tooth structure is capable of being engaged with one protrusion or the continuous protrusion. The tooth structure has a first tooth surface and a second tooth surface, and an included angle formed between the first tooth surface and a length direction of the connecting member is greater than an included angle formed between the second tooth surface and the length direction.

In some embodiments, a first angle is formed between the connecting arm and the engaging disc, and the first angle is greater than 90° and less than 180°. An average distance between the connecting arm and the sunroof glass is greater than a distance between the engaging disc and the sunroof glass.

In some embodiments, the connecting arm is perpendicular to the engaging disc and is located on a side of the engaging disc adjacent to the sunroof glass.

In some embodiments, the elastic engaging member further includes a plurality of tongues that are spaced apart on an outer edge of the engaging disc. One end of each tongue is connected to the engaging disc, and another end of each tongue is inclined toward the sunroof glass.

In some embodiments, the elastic engaging member further includes an extending portion connected to the engaging disc, and the extending portion and the engaging disc are configured to be located on two opposite surfaces of the roof frame, respectively.

In some embodiments, the elastic engaging member further includes an injection molding structure in a cylindrical shape. One end of the injection molding structure is connected to the engaging disc, and the plurality of claws are located inside the injection molding structure.

In some embodiments, the connecting member includes a connecting column and an expanding portion located at an end of the connecting column, the plurality of protrusions or the continuous protrusion is provided on the connecting column, and a diameter of the expanding portion is greater than a diameter of the connecting column. The first connecting layer is a first encapsulation structure wrapping the expanding portion, and the first encapsulation structure is configured to form a gap with the roof frame; or, the first connecting layer is an adhesive provided on a side of the expanding portion adjacent to the sunroof glass, and the expanding portion is configured to form a gap with the roof frame.

In some embodiments, the connecting member is fixed to the sunroof glass through a first connecting layer. The elastic engaging member includes a fixing cylinder and a plurality of claws connected to the fixing cylinder. Each claw includes a connecting arm and a tooth structure. One end of the connecting arm is connected to an inner wall of the fixing cylinder, the tooth structure is provided at another end of the connecting arm, and the tooth structure is capable of being engaged with one protrusion or the continuous protrusion. The tooth structure has a first tooth surface and a second tooth surface, and an included angle formed between the first tooth surface and a length direction of the connecting member is greater than an included angle formed between the second tooth surface and the length direction.

In some embodiments, the elastic engaging member further includes a plurality of tongues that are provided at an end of the fixing cylinder adjacent to the sunroof glass. The plurality of tongues are spaced apart on an outer edge of the fixing cylinder. One end of each tongue is connected to the fixing cylinder, and another end of each tongue is inclined toward the sunroof glass.

In some embodiments, the inner wall of the fixing cylinder is further provided with a plurality of positioning strips that are spaced apart along the inner wall.

In some embodiments, the first tooth surface and the second tooth surface are contoured surfaces corresponding to the continuous protrusion.

In some embodiments, at least one handle is provided on an outer wall of the fixing cylinder, or an outer surface of the fixing cylinder is a prismatic surface.

In some embodiments, the elastic engaging member is fixed to the sunroof glass through a second connecting layer. The elastic engaging member includes a main body portion and a plurality of claws connected to the main body portion. Each claw includes a connecting arm and a tooth structure. One end of the connecting arm is connected to the main body portion, the tooth structure is provided at another end of the connecting arm, and the tooth structure is capable of being engaged with one protrusion or the continuous protrusion. The tooth structure has a first tooth surface and a second tooth surface. An included angle formed between the first tooth surface and a length direction of the connecting member is greater than an included angle formed between the second tooth surface and the length direction. The connecting member includes a connecting column and an expanding portion located at an end of the connecting column. The plurality of protrusions or the continuous protrusion is provided on the connecting column, a diameter of the expanding portion is greater than a diameter of the connecting column, the expanding portion is provided at an end of the connecting column away from the sunroof glass, and the expanding portion abuts against the side of the roof frame away from the sunroof glass.

In some embodiments, the second connecting layer has a second encapsulation structure, the main body portion is embedded in the second encapsulation structure, and the second encapsulation structure is configured to form a gap with the roof frame.

In some embodiments, each protrusion or the continuous protrusion has a first side surface configured to abut against the first tooth surface, and an included angle formed between the first tooth surface and the first side surface is greater than or equal to 0° and less than or equal to 25°.

In some embodiments, the panoramic sunroof structure further includes a glass adhesive provided between the sunroof glass and the roof frame, and the sunroof glass and the roof frame are further connected through the glass adhesive.

An embodiment of the second aspect of this application provides a vehicle, which includes the panoramic sunroof structure of any one of the above embodiments.

In the related art, the sunroof glass is generally connected to the roof frame through glass adhesive. After the sunroof glass is mounted, the roof is usually mounted. The roof is generally connected to the sunroof glass through snap fasteners. During mounting, the operator needs to apply an upward force to the roof to engage the snap fastener on the roof with the snap fastener on the sunroof. However, due to a long curing time required for the glass adhesive, the glass adhesive is usually not fully cured when the roof is mounted. Therefore, the force applied by the operator during the mounting of the roof may cause the position of the sunroof glass to be displaced.

To address the above problems, the embodiments of the first aspect of the present application provide a panoramic sunroof structure to improve the problem that the sunroof glass may be displaced when the roof is mounted.

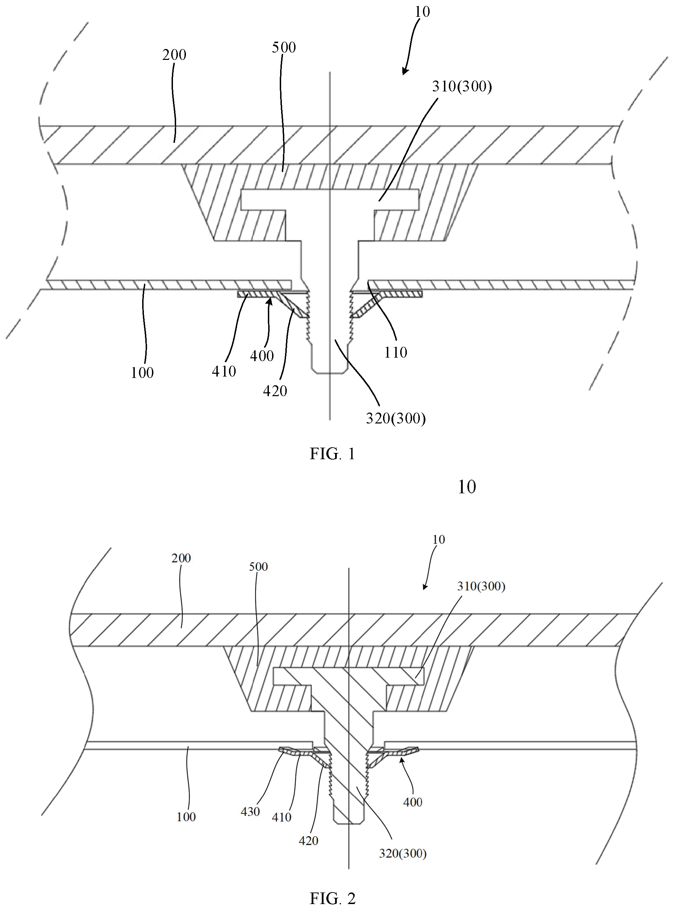

As shown in FIGs. 1, 2, and 3, the panoramic sunroof structure 10 according to an embodiment of a first aspect of the present application includes a sunroof glass 200, a connecting member 300, and an elastic engaging member 400. A surface of the connecting member 300 is formed with a plurality of protrusions 301 spaced apart along a length direction of the connecting member 300, or the surface is formed with a continuous protrusion 302 extending along a spiral line. The elastic engaging member 400 can be engaged with the plurality of protrusions 301 or the continuous protrusion 302. One of the connecting member 300 and the elastic engaging member 400 is fixed to the sunroof glass 200, the connecting member 300 is configured to extend through a mounting hole 110 on a roof frame 100, and the other of the connecting member 300 and the elastic engaging member 400 is configured to abut against a side of the roof frame 100 away from the sunroof glass.

The roof frame 100 is a frame structure located at the top of a vehicle body. The roof frame 100 is generally fixedly connected to the vehicle body, or it can also be regarded as part of the vehicle body. For example, the roof frame 100 may be a sheet metal member located at the top of the vehicle body.

The elastic engaging member 400 is a structure that can be engaged with the connecting member 300 and can undergo elastic deformation itself. When subjected to external force, the elastic engaging member 400 can undergo elastic deformation. When the external force is removed, the elastic engaging member 400 can restore to its original shape. The elastic engaging member 400 can be specifically made of metal or plastic.

After the panoramic sunroof structure 10 of the embodiment of the present application is mounted to the roof frame 100, the connecting member 300 and the elastic engaging member 400 are provided between the sunroof glass 200 and the roof frame 100. By engaging the elastic engaging member 400 with the connecting member 300, the sunroof glass 200 and the roof frame 100 can be connected. In this way, when the roof is mounted subsequently, the connecting member 300 and the elastic engaging member 400 can restrict the sunroof glass 200 from moving upward, thereby improving the problem of displacement of the sunroof glass 200 when the roof is mounted.

In addition, in the related art, there is also a solution of locking the sunroof glass and the roof frame by bolts and nuts to prevent the sunroof glass from being displaced when the roof is mounted. The inventors of the present application have discovered that the locking method using bolts and nuts typically involves a relatively large locking force. This causes that during and after the locking process, a local part of the sunroof glass may be subjected to a large downward tension. Under the action of the tension, the sunroof glass may be broken directly, or be in a deformed and tight state, and it is easy to crack when subjected to a small external impact force.

In contrast, in the panoramic sunroof structure 10 of the embodiment of the present application, the sunroof glass 200 and the roof frame 100 are connected through the connecting member 300 and the elastic engaging member 400 that can undergo elastic deformation. The force on the sunroof glass 200 mainly comes from the elastic force provided by the elastic engaging member 400 after deformation. Compared to the rigid connection method of locking by bolts and nuts, the sun glass 200 is subjected to much less force. Therefore, it is conducive to reducing the risk of damage to the sunroof glass 200 while connecting the sunroof glass 200 and the roof frame 100.

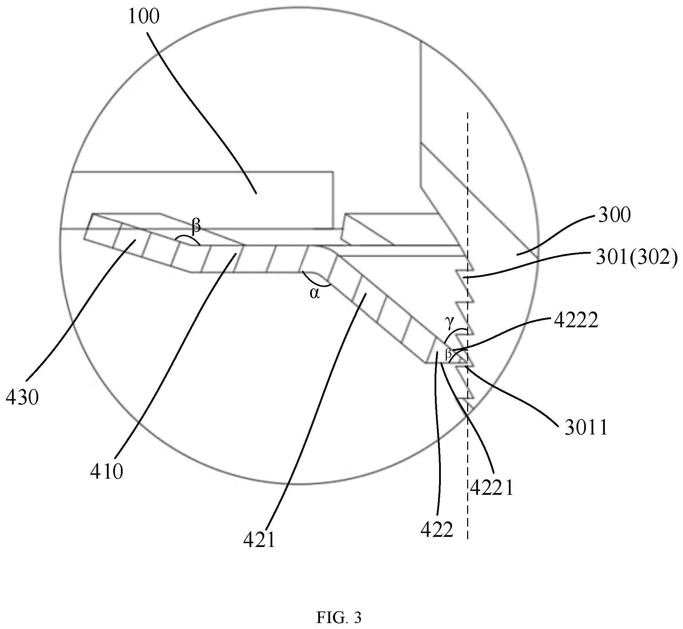

In some embodiments, as shown in FIG. 3, the connecting member 300 is fixed to the sunroof glass 200 through a first connecting layer. The elastic engaging member 400 includes an engaging disc 410 and a plurality of claws 420 connected to the engaging disc 410. The engaging disc 410 has an annular structure. Each claw 420 includes a connecting arm 421 and a tooth structure 422. One end of the connecting arm 421 is connected to an inner ring of the engaging disc 410, the tooth structure 422 is provided at the other end of the connecting arm 421, and the tooth structure 422 can be engaged with the protrusion 301 or the continuous protrusion 302. The tooth structure 422 can be engaged with the protrusion 301 or the continuous protrusion 302. The tooth structure 422 has a first tooth surface 4221 and a second tooth surface 4222. An included angle formed between the first tooth surface 4221 and the length direction of the connecting member 300 is greater than an included angle formed between the second tooth surface 4222 and the length direction.

The first connecting layer is a structure that can connect the connecting member 300 to the sunroof glass 200.

The elastic engaging member 400 includes the plurality of claws 420, and each claw 420 includes the connecting arm 421 and the tooth structure 422 located at the end of the connecting arm 421. The tooth structure 422 has the first tooth surface 4221 and the second tooth surface 4222, and the included angle β formed between the first tooth surface 4221 and the length direction of the connecting member 300 is greater than the included angle γ formed between the second tooth surface 4222 and the length direction of the connecting member 300. In this way, it is beneficial to enable the elastic engaging member 400 to move only in one direction with the connecting member 300. That is, under the restriction of the tooth structure 422 and the protrusion 301 or the continuous protrusion 302, the elastic engaging member 400 cannot move in the reverse direction relative to the connecting member 300.

During the mounting of the sunroof glass 200, the elastic engaging member 400 can be sleeved on the connecting member 300, and the elastic engaging member 400 can be moved upward relative to the connecting member 300 until the elastic engaging member 400 abuts against the roof frame 100. During the above mounting process, the upward movement of the elastic engaging member 400 is not restricted, while the elastic engaging member 400 cannot move downward. In this way, when the elastic engaging member 400 is mounted in place, it can maintain a stable connection between the elastic engaging member 400 and the connecting member 300.

In addition, the plurality of claws 420 are provided. In this way, after the tooth structure 422 of the claw 420 is engaged with the protrusion 301 or the continuous protrusion 302, the force uniformity of the elastic engaging member 400 is improved.

In some embodiments, a first angle α is formed between the connecting arm 421 and the engaging disc 410, and the first angle α is greater than 90° and less than 180°. An average distance between the connecting arm 421 and the sunroof glass 200 is greater than a distance between the engaging disc 410 and the sunroof glass 200.

Since the first angle α is greater than 90° and less than 180°, the distances from different parts of the connecting arm 421 to the sunroof glass 200 are different. The average distance between the connecting arm 421 and the sunroof glass 200 can be understood as an average value of distances from each point on the connecting arm 421 to the sunroof glass 200.

In this embodiment, the first angle α formed between the connecting arm 421 and the engaging disc 410 is greater than 90° and less than 180°, which provides a space for the connecting arm 421 to be elastically deformed. Therefore, when the elastic engaging member 400 is pushed upward, the connecting arm 421 can be more easily elastically deformed, so that the elastic connecting member can move upward relative to the connecting member 300.

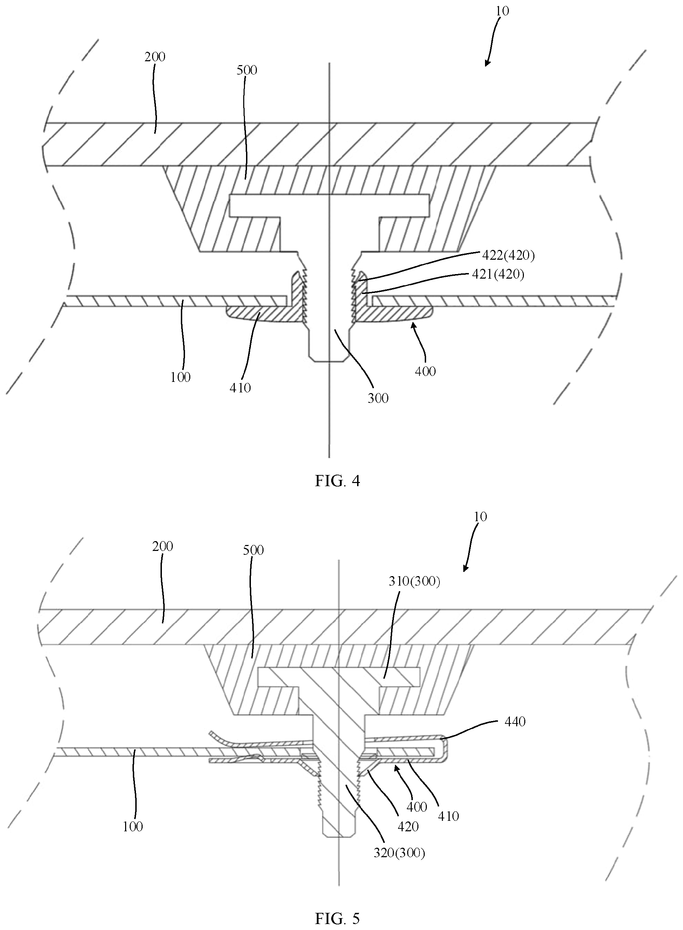

In other embodiments, as shown in FIG. 4, the connecting arm 421 is perpendicular to the engaging disc 410, and the connecting arm 421 is located on the side of the engaging disc 410 adjacent to the sunroof glass 200. Such arrangement enables the claws 420 to be located above the engaging disc 410, thereby helping to reduce the space occupied by the elastic engaging member 400 in a vehicle compartment.

In some embodiments, as shown in FIG. 2 and FIG. 3, the elastic engaging member 400 further includes a plurality of tongues 430 that are spaced apart on an outer edge of the engaging disc 410. One end of the tongue 430 is connected to the engaging disc 410, and the other end of the tongue 430 is inclined toward the sunroof glass 200. Such arrangement makes the tongue 430 more likely to be elastically deformed than the engaging disc 410. In this way, the elastic engaging member 400 can be abutted against the roof frame 100 by causing the tongue 430 to undergo elastic deformation. Therefore, it is beneficial to avoid the mounting gap between the elastic engaging member 400 and the roof frame 100, thus preventing the elastic engaging member 400 from wobbling after mounting.

In some embodiments, as shown in FIG. 5, the elastic engaging member 400 further includes an extending portion 440 connected to the engaging disc 410. The extending portion 440 and the engaging disc 410 are configured to be located on two opposite surfaces of the roof frame 100, respectively.

During the mounting of the sunroof glass 200, the engaging disc 410 and the extending portion 440 can first clamp the roof frame 100, so as to fix the elastic engaging member 400 to the roof frame 100, and then the connecting member 300 on the sunroof glass 200 extends through the inner ring of the engaging disc 410, so that the connecting member 300 moves downward relative to the elastic engaging member 400. When the sunroof glass 200 is mounted in place, the elastic engaging member 400 will be engaged with the protrusion 301 or the continuous protrusion 302 on the connecting member 300. This mounting method omits the process of pushing the elastic engaging member 400 upwards to make it move upwards, thus the mounting process is more labor-saving.

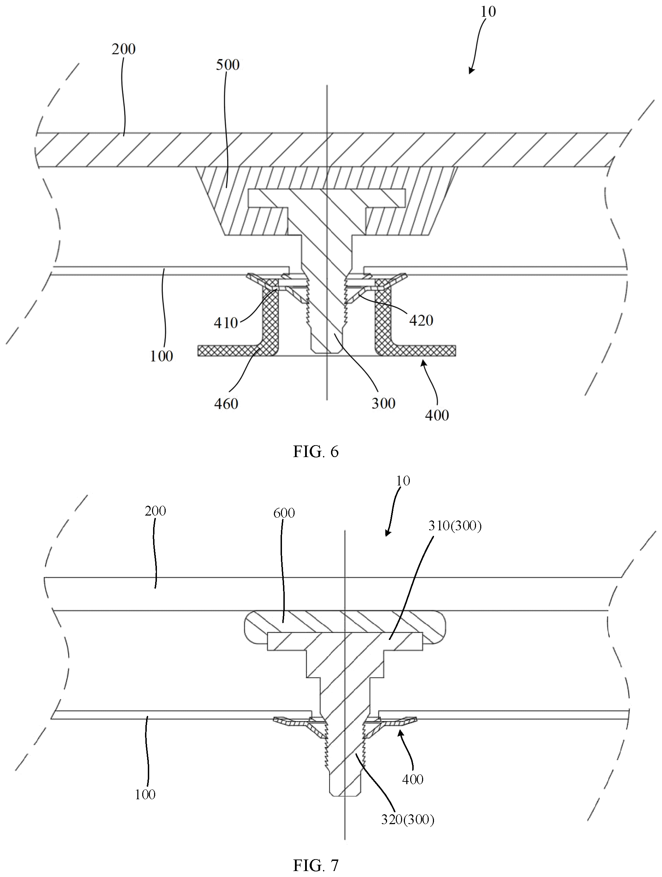

In some embodiments, as shown in FIG. 6, the elastic engaging member 400 further includes an injection molding structure 460, which is cylindrical. One end of the injection molding structure 460 is connected to the engaging disc 410, and the claws 420 are located inside the injection molding structure 460. The volume of the engaging disc 410 is small, which makes it inconvenient to be taken. Therefore, the elastic engaging member 400 further includes the injection molding structure 460. The arrangement of the injection molding structure 460 increases a size of the elastic engaging member 400 in a height direction thereof, thus the elastic engaging member 400 can be conveniently taken. When mounting the elastic engaging member 400, the operator can hold the injection molding structure 460, which makes the mounting operation more convenient.

In one embodiment, as shown in FIGs. 1 to 6, the connecting member 300 includes a connecting column and an expanding portion located at an end of the connecting column. The protrusions 301 or the continuous protrusion 302 are provided on the connecting column, and a diameter of the expanding portion is greater than a diameter of the connecting column. The first connecting layer is a first encapsulation structure 500 wrapping the expanding portion, and the first encapsulation structure 500 is configured to form a gap with the roof frame 100.

The first encapsulation structure 500 can be manufactured by injection molding. The connecting member 300 is connected to the sunroof glass 200 through the first encapsulation structure 500, and the first encapsulation structure 500 wraps the expanding portion of the connecting member 300. Thus, the connection between the connecting member 300 and the sunroof glass 200 can be achieved, and this connection method is relatively firm and reliable. In addition, after the mounting is completed, a gap is maintained between the first encapsulation structure 500 and the roof frame 100. In the related art, the method of locking with bolts and nuts usually locks until it abuts against the encapsulation structure, which leads to a large locking force. In contrast, in the embodiment, the gap is maintained between the first encapsulation structure 500 and the roof frame 100, so that no excessive locking force will be generated.

In addition, maintaining the gap between the first encapsulation structure 500 and the roof frame 100 can also prevent the sunroof glass 200 from being lifted by the first encapsulation structure 500.

In another embodiment, as shown in FIG. 7, the connecting member 300 includes a connecting column and an expanding portion located at an end of the connecting column. The protrusions 301 or the continuous protrusion 302 are provided on the connecting column, and the diameter of the expanding portion is greater than the diameter of the connecting column. The first connecting layer is an adhesive provided on the side of the expanding portion adjacent to the sunroof glass, and the expanding portion is configured to form a gap with the roof frame 100. The connecting member 300 is connected to the sunroof glass 200 through the adhesive 600. This connection method is easy to implement and is conducive to improving the mounting efficiency.

In addition, after the mounting is completed, the gap is maintained between the expanding portion and the roof frame 100, so that no excessive locking force will be generated, and the sunroof glass 200 can also be prevented from being lifted by the connecting member 300.

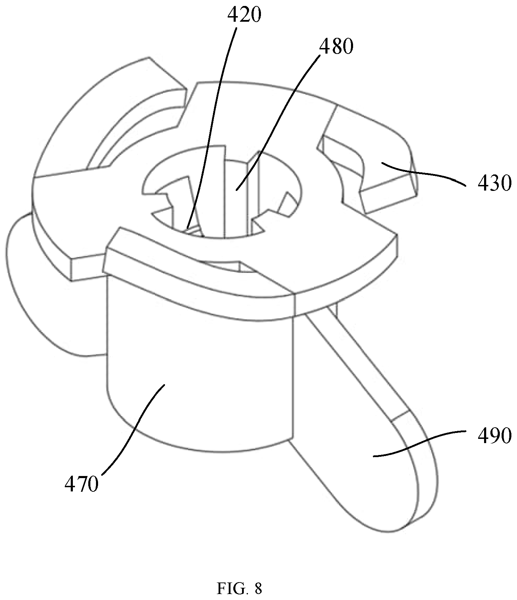

In some embodiments, the connecting member 300 is fixed to the sunroof glass 200 through a first connecting layer. As shown in FIGs. 8, 9 and 10, the elastic engaging member 400 includes a fixing cylinder 470 and a plurality of claws 420 connected to the fixing cylinder 470. Each claw 420 includes a connecting arm 421 and a tooth structure 422. One end of the connecting arm 421 is connected to an inner wall of the fixing cylinder 470, and the tooth structure 422 is provided at the other end of the connecting arm 421. The tooth structure 422 can be engaged with the protrusion 301 or the continuous protrusion 302. The tooth structure 422 has a first tooth surface 4221 and a second tooth surface 4222. An included angle β between the first tooth surface 4221 and the length direction of the connecting member 300 is greater than an included angle γ between the second tooth surface 4222 and the length direction of the connecting member 300.

The elastic engaging member 400 includes the fixing cylinder 470 and the plurality of claws 420. Each claw 420 includes the connecting arm 421 and the tooth structure 422 located at the end of the connecting arm 421. The tooth structure 422 has the first tooth surface 4221 and the second tooth surface 4222, and the included angle formed between the first tooth surface 4221 and the length direction of the connecting member 300 is greater than the included angle formed between the second tooth surface 4222 and the length direction of the connecting member 300. In this way, it is beneficial to enable the elastic engaging member 400 to move only in one direction with the connecting member 300. That is, under the restriction of the tooth structure 422 and the protrusion 301 or the continuous protrusion 302, the elastic engaging member 400 cannot move in the reverse direction relative to the connecting member 300.

In addition, compared to the engaging disc 410, the fixing cylinder 470 has a relatively larger size in a height direction thereof, which is more convenient for the operator to take and operate during mounting.

In some embodiments, the elastic engaging member further includes a plurality of tongues 430 that are provided at an end of the fixing cylinder 470 adjacent to the sunroof glass 200. The plurality of tongues 430 are spaced apart on an outer edge of the fixing cylinder 470. One end of the tongue 430 is connected to the fixing cylinder 470, and the other end of the tongue 430 is inclined toward the sunroof glass 200. With such configuration, the elastic engaging member 400 can be abutted against the roof frame 100 by the elastic deformation of the tongue 430. Therefore, it is beneficial to avoid the mounting gap between the elastic engaging member 400 and the roof frame 100, thus preventing the elastic engaging member 400 from wobbling after mounting.

In some embodiments, the inner wall of the fixing cylinder 470 is further provided with a plurality of positioning strips 480 that are spaced apart along the inner wall. The positioning strips 480 are in contact with the protrusions 301 or the continuous protrusion 302, the fixing cylinder 470 can be positioned, which is beneficial to improve the coaxiality between the fixing cylinder 470 and the connecting member 300.

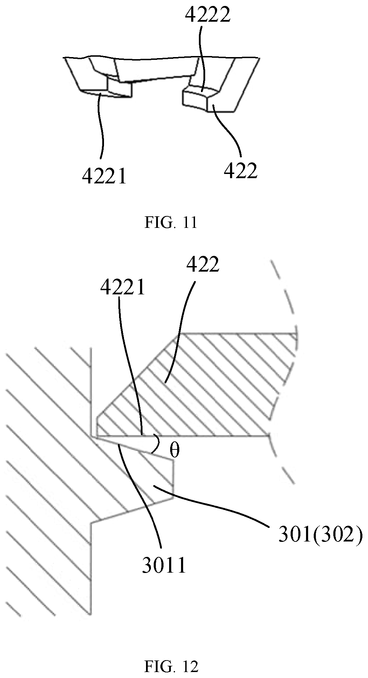

In some embodiments, as shown in FIG. 11, the first tooth surface 4221 and the second tooth surface 4222 are contoured surfaces corresponding to the continuous protrusion 302. In this way, when the surface of the connecting member 300 is provided with the continuous protrusion 302 extending along a spiral line, the tooth structure 422 can be more tightly engaged with the continuous protrusion 302, thereby improving the stability of the engagement.

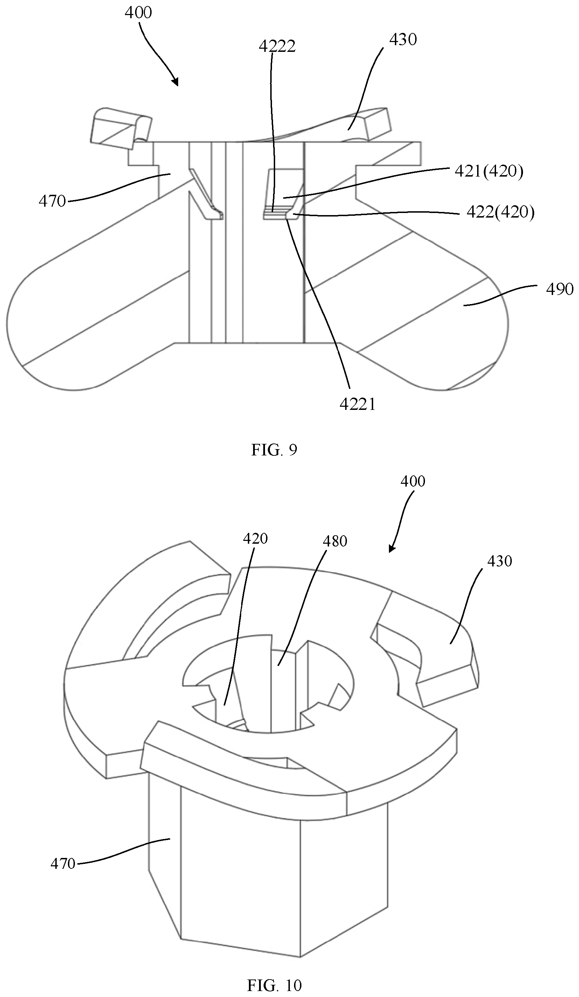

In some embodiments, at least one handle 490 (see FIG. 8) is provided on an outer wall of the fixing cylinder 470, or an outer surface of the fixing cylinder 470 is a prismatic surface (see FIG. 10). When performing mounting, the operator can hold the handle 490 or the prismatic surface, which makes it more convenient for the operator to take and perform the mounting operation, and it is not easy to slip.

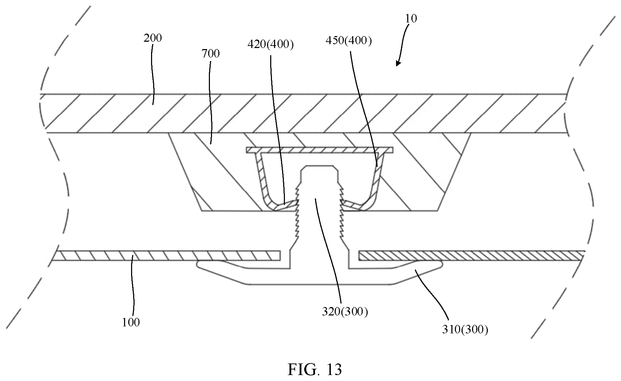

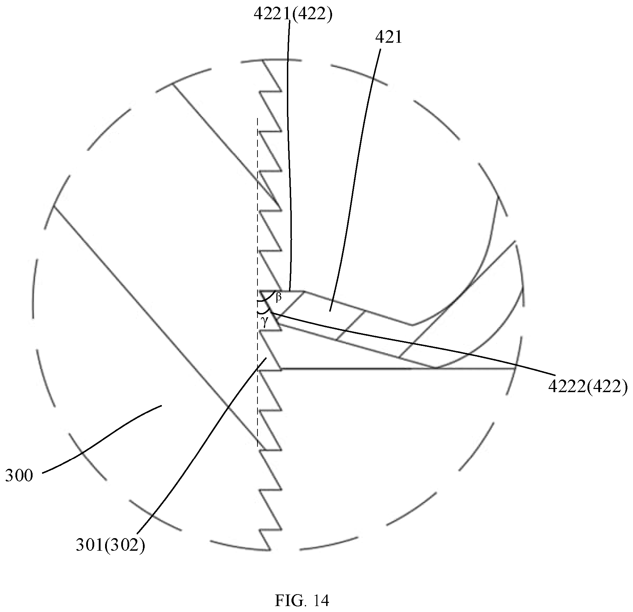

In some embodiments, as shown in FIGs. 13 and 14, the elastic engaging member 400 is fixed to the sunroof glass 200 through a second connecting layer. The elastic engaging member 400 includes a main body portion 450 and a plurality of claws 420 connected to the main body portion 450. Each claw 420 includes a connecting arm 421 and a tooth structure 422. One end of the connecting arm 421 is connected to the main body portion 450, and the tooth structure 422 is provided at the other end of the connecting arm 421. The tooth structure 422 can be engaged with the protrusion 301 or the continuous protrusion 302. The tooth structure 422 has a first tooth surface 4221 and a second tooth surface 4222. An included angle β between the first tooth surface 4221 and the length direction of the connecting member 300 is greater than an included angle γ between the second tooth surface 4222 and the length direction. The connecting member 300 includes a connecting column 320 and an expanding portion 310 located at an end of the connecting column 320. The protrusions 301 or the continuous protrusion 302 is provided on the connecting column 320. A diameter of the expanding portion 310 is greater than a diameter of the connecting column 320. The expanding portion 310 is provided at an end of the connecting column 320 away from the sunroof glass 200. The expanding portion 310 abuts against the side of the roof frame 100 away from the sunroof glass 200.

In this embodiment, the elastic engaging member 400 is connected to the sunroof glass 200, and the connecting member 300 abuts against the roof frame 100. In this case, the sunroof glass 200 and the roof frame 100 can also be connected by the engagement between the elastic engaging member 400 and the protrusions 301 or the continuous protrusion 302 on the connecting member 300.

In addition, the tooth structure 422 has the first tooth surface 4221 and the second tooth surface 4222, and the included angle formed between the first tooth surface 4221 and the length direction of the connecting member 300 is greater than the included angle formed between the second tooth surface 4222 and the length direction of the connecting member 300. In this way, it is beneficial to enable the elastic engaging member 400 to move only in one direction with the connecting member 300. That is, under the restriction of the tooth structure 422 and the protrusion 301 or the continuous protrusion 302, the elastic engaging member 400 cannot move in the reverse direction relative to the connecting member 300.

In one embodiment, the second connecting layerhas a second encapsulation structure 700. The main body portion 450 is embedded in the second encapsulation structure 700, and the second encapsulation structure 700 is configured to form a gap with the roof frame 100. The second encapsulation structure 700 can be manufactured by injection molding, that is, the connection between the elastic engaging member 400 and the sunroof glass 200 can be achieved by forming the second encapsulation structure 700 through injection molding. This connection method is relatively firm and reliable. In addition, the second encapsulation structure 700 is configured to have a gap with the roof frame 100, so that no excessive locking force will be generated, and the sunroof glass 200 can also be prevented from being lifted by the second encapsulation structure 700.

In some embodiments, as shown in FIG. 12, the protrusion 301 or the continuous protrusion 302 has a first side surface 3011 configured to abut against the first tooth surface 4221. An included angle θ formed between the first tooth surface 4221 and the first side surface 3011 is greater than or equal to 0° and less than or equal to 25°, which is beneficial to the stability of the tooth structure 422 when it is engaged with the protrusion 301 or the continuous protrusion 302.

In some embodiments, a length L of a contact portion between the tooth structure 422 and the protrusion 301 or the continuous protrusion 302 is greater than or equal to 0.1 mm, which is beneficial to improve the stability of the tooth structure 422 when it is engaged with the protrusion 301 or the continuous protrusion 302.

Further, a cross-sectional shape of the protrusion 301 or the continuous protrusion 302 may be rectangular, triangular, trapezoidal, irregular quadrilateral, etc.

In some embodiments, the panoramic sunroof structure 10 further includes a glass adhesive provided between the sunroof glass 200 and the roof frame 100, and the sunroof glass 200 and the roof frame 100 are further connected through the glass adhesive. The glass adhesive can achieve a seal between the sunroof glass 200 and the roof frame 100, so that the panoramic sunroof roof has good dustproof and waterproof performance.

An embodiment of the second aspect of the present application provides a vehicle, which includes the panoramic sunroof structure 10 of any of the above embodiments.

The vehicle in the embodiment uses the panoramic sunroof structure 10, in which the connecting member 300 and the elastic engaging member 400 are provided between the sunroof glass 200 and the roof frame 100. By engaging the elastic engaging member 400 with the connecting member 300, the sunroof glass 200 and the roof frame 100 can be connected. In this way, when the roof is mounted subsequently, the connecting member 300 and the elastic engaging member 400 can restrict the canopy glass 200 from moving upward, thereby improving the problem of displacement of the sunroof glass 200 when the roof is mounted.

In addition, the sunroof glass 200 and the roof frame 100 are connected through the connecting member 300 and the elastic engaging member 400 that can undergo elastic deformation. The force on the sunroof glass 200 mainly comes from the elastic force provided by the elastic engaging member 400 after deformation. Compared to the rigid connection method of locking by bolts and nuts, the sun glass 200 is subjected to much less force. Therefore, it is conducive to reducing the risk of damage to the sunroof glass 200 while connecting the sunroof glass 200 and the roof frame 100.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the specification.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the protection scope of the present application should be subject to the appended claims.

## Claims

1. A panoramic sunroof structure, comprising:a sunroof glass;
a connecting member, a surface of the connecting member being provided with a plurality of protrusions spaced apart along a length direction of the connecting member, or a surface of the connecting member is formed with a continuous protrusion extending along a spiral line; and
an elastic engaging member capable of being engaged with the plurality of protrusions or the continuous protrusion;
wherein one of the connecting member and the elastic engaging member is fixed to the sunroof glass, the connecting member is configured to extend through a mounting hole provided on a roof frame, and another of the connecting member and the elastic engaging member is configured to abut against a side of the roof frame away from the sunroof glass.

2. The panoramic sunroof structure according to claim 1, wherein the connecting member is fixed to the sunroof glass through a first connecting layer, the elastic engaging member comprises an engaging disc and a plurality of claws connected to the engaging disc, the engaging disc has an annular structure, each claw comprises a connecting arm and a tooth structure, one end of the connecting arm is connected to an inner ring of the engaging disc, the tooth structure is provided at another end of the connecting arm, the tooth structure is capable of being engaged with one protrusion or the continuous protrusion, the tooth structure has a first tooth surface and a second tooth surface, and an included angle formed between the first tooth surface and a length direction of the connecting member is greater than an included angle formed between the second tooth surface and the length direction.

3. The panoramic sunroof structure according to claim 2, wherein a first angle is formed between the connecting arm and the engaging disc, the first angle is greater than 90° and less than 180°, and an average distance between the connecting arm and the sunroof glass is greater than a distance between the engaging disc and the sunroof glass.

4. The panoramic sunroof structure according to claim 2, wherein the connecting arm is perpendicular to the engaging disc and is located on a side of the engaging disc adjacent to the sunroof glass.

5. The panoramic sunroof structure according to claim 2, wherein the elastic engaging member further comprises a plurality of tongues that are spaced apart on an outer edge of the engaging disc, one end of each tongue is connected to the engaging disc, and another end of each tongue is inclined toward the sunroof glass.

6. The panoramic sunroof structure according to claim 2, wherein the elastic engaging member further comprises an extending portion connected to the engaging disc, and the extending portion and the engaging disc are configured to be located on two opposite surfaces of the roof frame, respectively.

7. The panoramic sunroof structure according to claim 2, wherein the elastic engaging member further comprises an injection molding structure in a cylindrical shape, one end of the injection molding structure is connected to the engaging disc, and the plurality of claws are located inside the injection molding structure.

8. The panoramic sunroof structure according to claim 2, wherein the connecting member comprises a connecting column and an expanding portion located at an end of the connecting column, the plurality of protrusions or the continuous protrusion is provided on the connecting column, and a diameter of the expanding portion is greater than a diameter of the connecting column;
the first connecting layer is a first encapsulation structure wrapping the expanding portion, and the first encapsulation structure is configured to form a gap with the roof frame; or, the first connecting layer is an adhesive provided on a side of the expanding portion adjacent to the sunroof glass, and the expanding portion is configured to form a gap with the roof frame.

9. The panoramic sunroof structure according to claim 1, wherein the connecting member is fixed to the sunroof glass through a first connecting layer, the elastic engaging member comprises a fixing cylinder and a plurality of claws connected to the fixing cylinder, each claw comprises a connecting arm and a tooth structure, one end of the connecting arm is connected to an inner wall of the fixing cylinder, the tooth structure is provided at another end of the connecting arm, the tooth structure is capable of being engaged with one protrusion or the continuous protrusion, the tooth structure has a first tooth surface and a second tooth surface, and an included angle formed between the first tooth surface and a length direction of the connecting member is greater than an included angle formed between the second tooth surface and the length direction.

10. The panoramic sunroof structure according to claim 9, wherein the elastic engaging member further comprises a plurality of tongues that are provided at an end of the fixing cylinder adjacent to the sunroof glass, the plurality of tongues are spaced apart on an outer edge of the fixing cylinder, one end of each tongue is connected to the fixing cylinder, and another end of each tongue is inclined toward the sunroof glass.

11. The panoramic sunroof structure according to claim 9, wherein the inner wall of the fixing cylinder is further provided with a plurality of positioning strips that are spaced apart along the inner wall; and/or, the first tooth surface and the second tooth surface are contoured surfaces corresponding to the continuous protrusion.

12. The panoramic sunroof structure according to claim 9, wherein at least one handle is provided on an outer wall of the fixing cylinder, or an outer surface of the fixing cylinder is a prismatic surface.

13. The panoramic sunroof structure according to claim 1, wherein the elastic engaging member is fixed to the sunroof glass through a second connecting layer, the elastic engaging member comprises a main body portion and a plurality of claws connected to the main body portion, each claw comprises a connecting arm and a tooth structure, one end of the connecting arm is connected to the main body portion, the tooth structure is provided at another end of the connecting arm, the tooth structure is capable of being engaged with one protrusion or the continuous protrusion, the tooth structure has a first tooth surface and a second tooth surface, an included angle formed between the first tooth surface and a length direction of the connecting member is greater than an included angle formed between the second tooth surface and the length direction, the connecting member comprises a connecting column and an expanding portion located at an end of the connecting column the plurality of protrusions or the continuous protrusion is provided on the connecting column, a diameter of the expanding portion is greater than a diameter of the connecting column, the expanding portion is provided at an end of the connecting column away from the sunroof glass, and the expanding portion abuts against the side of the roof frame away from the sunroof glass.

14. The panoramic sunroof structure according to claim 13, wherein the second connecting layer has a second encapsulation structure, the main body portion is embedded in the second encapsulation structure, and the second encapsulation structure is configured to form a gap with the roof frame.

15. The panoramic sunroof structure according to any one of claims 2 to 14, wherein each protrusion or the continuous protrusion has a first side surface configured to abut against the first tooth surface, and an included angle formed between the first tooth surface and the first side surface is greater than or equal to 0° and less than or equal to 25°.

16. The panoramic sunroof structure according to any one of claims 1 to 14, further comprising a glass adhesive provided between the sunroof glass and the roof frame, wherein the sunroof glass and the roof frame are further connected through the glass adhesive.

17. A vehicle comprising the panoramic sunroof structure according to any one of claims 1 to 16.
